# EUROPÄISCHE PATENTSCHRIFT

(11) **EP 1 899 191 B1**
(45) Veröffentlichungstag und Bekanntmachung des Hinweises auf die Patenterteilung: **14.07.2010**
(21) Anmeldenummer: 06742624.7
(22) Anmeldetag: 20.04.2006
(51) Int. Cl.: B60K 35/00

(54) **KOMBIINSTRUMENT FÜR EIN KRAFTFAHRZEUG**
COMBINATION INSTRUMENT FOR A MOTOR VEHICLE
GROUPE D'INSTRUMENTS POUR UN VEHICULE AUTOMOBILE

(30) Priorität: 27.06.2005 DE 102005029800
(43) Veröffentlichungstag der Anmeldung: 19.03.2008
(73) Patentinhaber: Volkswagen Aktiengesellschaft, 38436 Wolfsburg (DE)
(72) Erfinder: LUX, Stefan, 38527 Meine (DE)
(74) Vertreter: Banzer, Hans-Jörg
(86) Internationale Anmeldenummer: PCT/EP2006/003633
(87) Internationale Veröffentlichungsnummer: WO 2007/000201

(56) Entgegenhaltungen:
- EP-A- 0 482 805
- EP-A- 0 648 639
- DE-A- 4 323 082
- DE-A- 10 225 385
- DE-A- 10 333 745
- DE-C- 19 540 813
- US-A- 4 971 425

## Beschreibung

Die Erfindung betrifft ein Kombiinstrument für ein Kraftfahrzeug mit einer ersten Anzeigeeinrichtung und mit einer zweiten Anzeigeeinrichtung, wobei das Kombiinstrument einen semitransparenten Spiegel zum Reflektieren von mittels der zweiten Anzeigeeinrichtung emittiertem Licht aufweist, und wobei der semitransparente Spiegel für von der ersten Anzeigeeinrichtung emittiertes Licht im wesentlichen transparent ist.

Ein derart ausgestaltetes Kombiinstrument ist in der deutschen Patentanmeldung 103 33 745.8 beschrieben sowie in der EP 0 482 805 A1 offenbart.

Die EP 0 648 639 offenbart eine Anzeigevorrichtung mit einer ersten Anzeige und einer zweiten Anzeige. Dabei wird die zweite Anzeige an einer der ersten Anzeige vorgelagerten Reflektionsfläche eingespiegelt, wobei diese Reflektionsfläche in ihrer optischen Transparenz veränderbar ist.

Die Druckschrift DE 43 23 082 C2 beschreibt eine Anzeigeeinheit für Kraftfahrzeuge mit einer ein erstes Anzeigeelement enthaltenden ersten Anzeigeebene und einer als transparente Scheibe ausgebildeten zweiten Anzeigeebene, auf welcher Informationsinhalte eines zweiten Anzeigeelements sichtbar gemacht werden können. Dabei kann die zweite Anzeigeebene zumindest in einem begrenzten Feld als Licht undurchlässige Projektionsebene ausgebildet werden.

Die Druckschrift D E 103 33 745 A1 betrifft eine Anzeigeeinrichtung für ein Kraftfahrzeug mit einer ersten Displayeinrichtung, welche abbildendes Licht abgibt, und einer zweiten Anzeigeeinrichtung. Dabei ist die zweite Anzeigeeinrichtung zu der ersten Displayeinrichtung in einem Winkel angeordnet, wobei dazwischen ein Spiegel vorgesehen ist, welcher für das abbildende Licht der ersten Displayeinrichtung durchlässig und für das abbildende Licht der zweiten Anzeigeeinrichtung reflektierend ausgebildet ist.

Aus der DE 199 43 571 A1 ist ein Kombiinstrument mit einer auf der Rückseite eines Grundkörpers angeordneten starren Leiterplatte bekannt. Dieser Grundkörper wird auf der Vorderseite teilweise von einem Tragkörper abgedeckt, welcher gelenkig mit dem Grundkörper verbunden ist. Über die Vorderseite des Grundkörpers und des Tragkörpers erstreckt sich eine flexible Leiterplatte, welche einen definierten Winkel zu einem Randbereich der starren Leiterplatte umgelenkten Verbindungsbereich umfasst, der durch eine, z. B. Bügellötung, mit dieser Leiterplatte verbunden ist

Aus der DE 199 41 352 A1 ist ein Kombiinstrument mit einem Grundkörper bekannt, welcher in Anzeigefelder aufgeteilt ist, die mit unterschiedlichen Winkeln zueinander ausgerichtet sind. Auf der Vorderseite des Grundkörpers ist eine sich über mehrere Anzeigefelder erstreckende zusätzliche Leiterplatte angeordnet. Diese besteht aus starren Leiterplattenteilen, welche im Übergangsbereich der Anzeigefelder flexible Verbindungsbereiche mit Leiterbahnen aufweisen.

Aus der DE 198 19 822 A1 ist ein integriertes Kombiinstrument zum Anzeigen von unterschiedlichen Messdaten in einem Kraftfahrzeug bekannt, das mit analogen und digitalen Anzeigeinstrumenten bestückt ist. Das integrierte Kombiinstrument umfasst eine Einrichtung zur Ansteuerung der Anzeigeinstrumente und zum Durchführen einer oder mehrerer weiterer Funktionen der Karosseriezentralelektronik und Karosserieleistungselektronik und mindestens eine integrierte Sicherungseinrichtung für die Einrichtung.

Aus der DE 198 19 821 C1 ist ein Kombiinstrument zum Anzeigen von unterschiedlichen Messdaten in einem Kraftfahrzeug bekannt, das mit analogen und digitalen Anzeigeinstrumenten bestückt ist, wobei mechanische, optische und elektrische Bauteile der Anzeigeinstrumente auf einer Schaltungsträgereinrichtung angebracht sind und die elektronische Ansteuerung der Anzeigeinstrumente von einem auf der Schaltungsträgereinrichtung anbringbaren Elektronikmodul aus erfolgt. Die Schaltungsträgereinrichtung weist eine Verdrahtungsfolie auf, die zwischen einer rückseitigen Abdeckung und einer vorderseitigen Abdeckung einspannbar ist.

Aus der DE 198 19 393 A1 ist ebenfalls ein Kombiinstrument zum Anzeigen von unterschiedlichen Messdaten in einem Kraftfahrzeug bekannt, das mit analogen und digitalen Anzeigeinstrumenten bestückt ist, wobei mechanische, optische und elektrische Bauteile der Anzeigeinstrumente auf einer Trägerplatte gehaltert sind und die elektronische Ansteuerung der Anzeigeinstrumente von einem an der Trägerplatte anbringbaren Elektronikmodul aus erfolgt. Auf der Trägerplatte ist dabei jedoch eine Schaltungsträgereinrichtung zum Tragen der Verdrahtung der elektrischen Bauteile angebracht.

Es ist Aufgabe der Erfindung, die Anzeige von Informationen in einem Kraftfahrzeug zu verbessern.

Vorgenannte Aufgabe wird durch ein Kombiinstrument für ein Kraftfahrzeug mit den Merkmalen des Anspruchs 1 gelöst, wobei die zweite Anzeigeeinrichtung mittels der Scheibe mit einstellbarer Transparenz wahlweise (ganz oder teilweise) verdeckt werden kann.

In weiterhin vorteilhafter Ausgestaltung der Erfindung umfasst die Scheibe mit einstellbarer Transparenz zumindest eine Twisted Nematics Schicht, zumindest eine CLC (cholesteric liquid crystal) Schicht, zumindest eine PDLC (polymer dispersed liquid crystal) Schicht und/oder zumindest eine PALC Schicht. Einzelheiten zu Twisted Nematics Schichten können der Internetseite www.toshiba.ca/web/pdf/Innovative display Toshiba final.pdf sowie der Internetseite www.tvtechnology.com/features/Tech-Corner/f_AdvancedDisplays-03.10.04.shtml entnommen werden. PALC Schichten sind in der US 6 674 419 und der US 6 597 412 offenbart.

In weiterhin vorteilhafter Ausgestaltung der Erfindung ist die erste Anzeigeeinrichtung als Digitalanzeige ausgestaltet oder umfasst eine Digitalanzeige. Die erste Anzeigeeinrichtung kann z.B. entsprechend der in der EP 0 482 805 A1 mit Bezugszeichen 12 bezeichneten second image source ausgestaltet werden.

In weiterhin vorteilhafter Ausgestaltung der Erfindung ist die zweite Anzeigeeinrichtung als Analoganzeige ausgestaltet oder umfasst eine Analoganzeige.

In dem erfindungsgemäßen Kombiinstrument sind vorteilhafterweise der semitransparente Spiegel, die erste Anzeigeeinrichtung und die zweite Anzeigeeinrichtung derart zueinander angeordnet, dass ein Spiegelbild der zweiten Anzeigeeinrichtung für einen Betrachter vor der ersten Anzeigeeinrichtung erscheint. Ein semitransparenter Spiegel im Sinne der Erfindung umfasst insbesondere einen in der EP 0 482 805 A1 mit Bezugszeichen 13 bezeichneten combiner.

Vorgenannte Aufgabe wird zudem durch ein Kraftfahrzeug mit einem eines oder mehrere der vorgenannten Merkmale umfassenden Kombiinstrument gelöst. Das Kraftfahrzeug umfasst in vorteilhafter Ausgestaltung der Erfindung eine dem Kombiinstrument zugeordnete Anzeigesteuerung zur Einstellung der Transparenz der Scheibe mit einstellbarer Transparenz in Abhängigkeit von mittels der ersten Anzeigeeinrichtung dargestellten Informationen.

Eine Scheibe mit einstellbarer Transparenz im Sinne der Erfindung ist insbesondere eine Scheibe, die abhängig von einer angelegten Spannung, insbesondere durch eine orthogonale Polarisierung von Licht, einen Zustand annehmen kann, in dem sie transparent ist, und einen Zustand annehmen kann, in dem sie opak ist. Eine Scheibe mit einstellbarer Transparenz im Sinne der Erfindung ist insbesondere eine Scheibe, die einen Zustand annehmen kann, in dem sie transparent ist, und einen Zustand annehmen kann, in dem sie opak ist, wobei zwischen diesen beiden Zuständen vorteilhafterweise in weniger als 0,1s umgeschaltet werden kann.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: ein Ausführungsbeispiel eines Kraftfahrzeuges in einer Innenansicht,
- Fig. 2: eine perspektivische Prinzipdarstellung eines Ausführungsbeispiels eines Kombiin- strumentes,
- Fig. 3: ein Bild einer Anzeigvorrichtung eines Kombiinstrumentes gemäß Fig. 2 durch eine Scheibe mit einstellbarer Transparenz betrachtet,
- Fig. 4: ein weiteres Bild einer Anzeigvorrichtung eines Kombiinstrumentes gemäß Fig. 2 durch eine Scheibe mit einstellbarer Transparenz betrachtet,
- Fig. 5: das Kombiinstrument gemäß Fig. 2 aus der Sicht eines Insassen des Kraftfahrzeuges gemäß Fig. 1 und
- Fig. 6: das Kombiinstrument gemäß Fig. 2 in einem weiteren Zustand aus der Sicht eines Insassen des Kraftfahrzeuges gemäß Fig. 1.

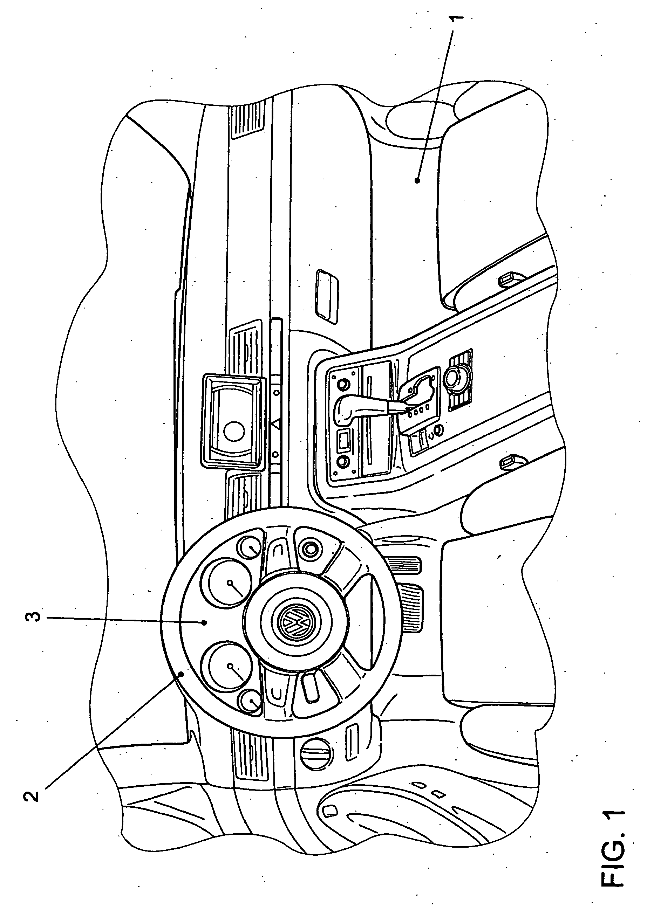

Fig. 1 zeigt ein Ausführungsbeispiel eines Kraftfahrzeuges 1 in einer Innenansicht. Das Kraftfahrzeug 1 umfasst ein hinter einem Lenkrad 2 angeordnetes Kombiinstrument 3, mittels dessen z.B. die Geschwindigkeit des Kraftfahrzeuges 1, die Drehzahl eines Motors des Kraftfahrzeuges 1, die Temperatur des Motors des Kraftfahrzeuges 1, die Tankfüllung und/oder die Zeit angezeigt werden können. Zudem kann vorgesehen sein, dass mittels des Kombiinstrumentes 3 z.B. Ausgaben eines Navigationssystems, Ausgaben eines Telefons, Ausgaben einer Musikanlage, Ausgaben eines Infotainmentsystems und/oder Ausgaben einer Klimaanlage anzeigbar sind.

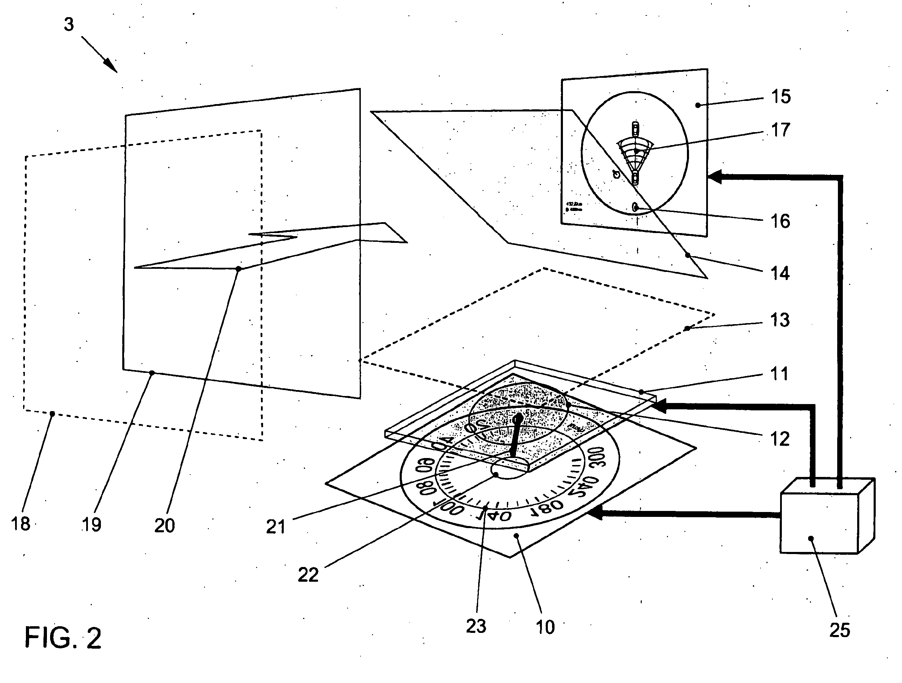

Fig. 2 zeigt eine perspektivische Prinzipdarstellung eines Teils des Kombiinstrumentes 3. Dabei sind Elemente, Winkel und Abstände in Fig. 2 unter Berücksichtigung von Einfachheit und Klarheit und nicht notwendigerweise maßstabsgetreu gezeichnet. So sind z.B. die Größenordnungen einiger Elemente, Winkel und Abstände übertrieben gegenüber anderen Elementen, Winkeln und Abständen dargestellt, um das Verständnis des Ausführungsbeispiels der vorliegenden Erfindung zu verbessern.

Das Kombiinstrument 3 umfasst eine erste Anzeigeeinrichtung 15 und eine zweite Anzeigeeinrichtung 10. Die zweite Anzeigeeinrichtung 10 umfasst im vorliegenden Ausführungsbeispiel Analoganzeigen zur Anzeige der Geschwindigkeit des Kraftfahrzeuges 1, der Drehzahl des Motors des Kraftfahrzeuges 1, der Temperatur des Motors des Kraftfahrzeuges 1 und der Tankfüllung, wobei aus Gründen der Übersichtlichkeit in Fig. 2 nur eine Analoganzeige zur Anzeige der Geschwindigkeit des Kraftfahrzeuges 1 dargestellt ist. Die Analoganzeige zur Anzeige der Geschwindigkeit des Kraftfahrzeuges 1 umfasst eine Skala 23 und einen um eine Zeigerbasis 22 drehbaren Zeiger 21 zur Anzeige der Geschwindigkeit des Kraftfahrzeuges 1 auf der Skala 23. Der Zeiger 21 und die Skala 23 können z.B. durch eine in der EP 0 482 805 A1 offenbarte Beleuchtung beleuchtet werden oder selbst leuchtend ausgestaltet sein.

Die erste Anzeigeeinrichtung 15 ist als Digitalanzeige ausgestaltet, mittels der das Kraftfahrzeug 1 betreffende Informationen wie z.B. die Geschwindigkeit des Kraftfahrzeuges 1, die Drehzahl eines Motors des Kraftfahrzeuges 1, die Temperatur eines Motors des Kraftfahrzeuges 1, die Tankfüllung, die Zeit, Ausgaben eines Navigationssystems, Ausgaben eines Telefons, Ausgaben einer Musikanlage, Ausgaben eines Infotainmentsystems und/oder Ausgaben einer Klimaanlage digital darstellbar sein können. In Fig. 2 ist ein Ausführungsbeispiel für einen Zustand dargestellt, in dem mittels der ersten Anzeigeeinrichtung 15 eine digitale Angabe 16 der Geschwindigkeit des Kraftfahrzeuges 1 und ein Status 17 einer Abstandsregelung angezeigt werden.

Das Kombiinstrument 3 umfasst zudem einen semitransparenten Spiegel 14 zum Reflektieren von mittels der zweiten Anzeigeeinrichtung 10 emittiertem Licht, wobei der semitransparente Spiegel 14 für von der ersten Anzeigeeinrichtung 15 emittiertes Licht im wesentlichen transparent ist. Dazu weist der semitransparente Spiegel 14 eine der ersten Anzeigeeinrichtung 15 zugewandte im Wesentlichen transparente Oberfläche und eine der zweiten Anzeigeeinrichtung 10 zugewandte im Wesentlichen reflektierende Oberfläche auf. Zudem sind die erste Anzeigeeinrichtung 15 und die zweite Anzeigeeinrichtung 10 im Wesentlichen orthogonal zueinander angeordnet. Der semitransparente Spiegel 14 ist sowohl gegenüber ersten Anzeigeeinrichtung 15 als auch der zweiten Anzeigeeinrichtung 10 gegenüber um in etwa 45° geneigt.

Das Kombiinstrument 3 umfasst weiterhin eine zwischen dem semitransparenten Spiegel 14 und der zweiten Anzeigeeinrichtung 10 angeordnete Scheibe 11 mit einstellbarer Transparenz. Die Scheibe 11 mit einstellbarer Transparenz umfasst eine steuerbare Schicht 12, die abhängig von einer angelegten Spannung, insbesondere durch eine orthogonale Polarisierung von Licht, einen Zustand annehmen kann, in dem sie transparent ist, und einen Zustand annehmen kann, in dem sie opak ist, wobei zwischen diesen beiden Zuständen vorteilhafterweise in weniger als 0,1s umgeschaltet werden kann. Die steuerbare Schicht 12 kann eine Twisted Nematics Schicht, eine CLC (cholesteric liquid crystal) Schicht, eine PDLC (polymer dispersed liquid crystal) Schicht und/oder eine PALC Schicht sein.

Zum Schutz des Kombiinstruments 3 weist es eine zum Innenraum des Kraftfahrzeuges 1 ausgerichtete Schutzscheibe 19 auf. Der mit Bezugszeichen 20 bezeichnete Pfeil beschreibt die Blickrichtung eines Insassen des Kraftfahrzeuges 1. Das in Fig. 2 lediglich in einer Prinzipdarstellung dargestellte Kombiinstrument 3 kann weitere Komponenten wie z.B. die in der EP 0 482 805 A1 mit Bezugszeichen 15 und 17 bezeichneten Spiegel umfassen.

Dem Kombiinstrument 3 ist eine Anzeigesteuerung 25 zur Steuerung der ersten Anzeigeeinrichtung 15, zur Steuerung der zweiten Anzeigeeinrichtung 10 und zur Einstellung der Transparenz der Scheibe 11 mit einstellbarer Transparenz in Abhängigkeit von mittels der ersten Anzeigeeinrichtung 15 dargestellten Informationen zugeordnet.

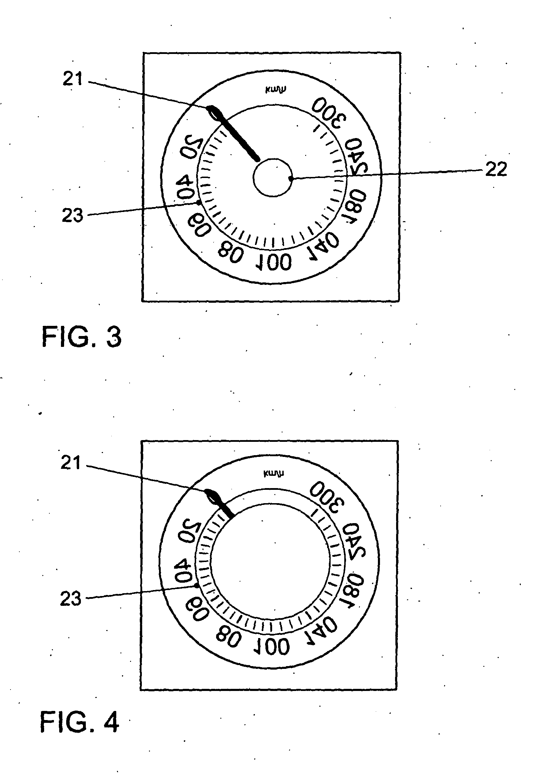

Fig. 3 zeigt ein Bild der zweiten Anzeigeeinrichtung 10 von der in Fig. 2 dargestellten Ebene 13 durch eine Scheibe 11 mit einstellbarer Transparenz gesehen für einen Zustand, in dem die steuerbare Schicht 12 bedingt durch entsprechende Ansteuerung mittels der Anzeigesteuerung 25 transparent ist. Diesen Zustand nimmt die steuerbare Schicht 12 bedingt durch entsprechende Ansteuerung mittels der Anzeigesteuerung 25 dann an, wenn im Bereich der Zeigerbasis 22 keine von ersten Anzeigeeinrichtung 15 dargestellten Informationen eingeblendet werden sollen. Sollen dagegen im Bereich der Zeigerbasis 22 von ersten Anzeigeeinrichtung 15 dargestellte Informationen eingeblendet werden, so wird die steuerbare Schicht 12 mittels der Anzeigesteuerung 25 derart angesteuert, dass sie opak ist. Fig. 4 zeigt ein entsprechendes Bild der zweiten Anzeigeeinrichtung 10 von der Ebene 13 durch eine Scheibe 11 mit einstellbarer Transparenz gesehen für einen Zustand, in dem die steuerbare Schicht 12 opak ist.

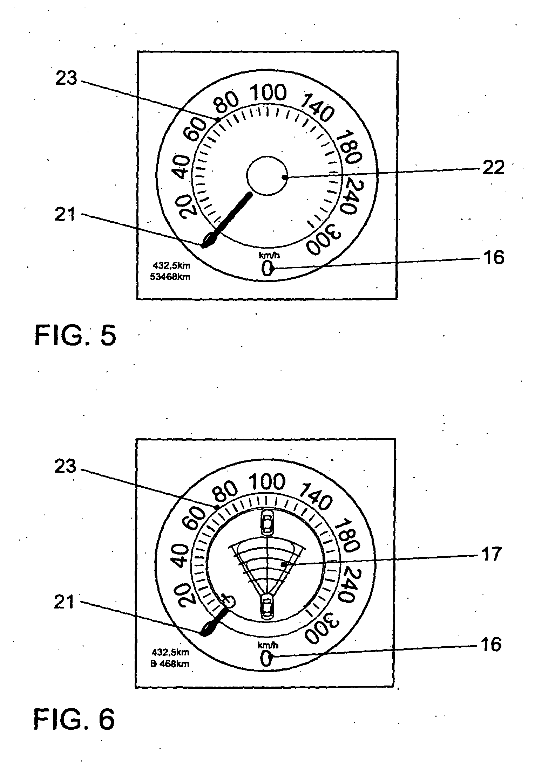

Fig. 5 zeigt das Kombiinstrument 3 aus der Sicht eines Insassen des Kraftfahrzeuges 1, also aus der in Fig. 2 dargestellten Ebene 18 heraus betrachtet, für den zu Fig. 3 korrespondierenden Zustand, in dem die die steuerbare Schicht 12 transparent ist. Dabei wird die von der ersten Anzeigeeinrichtung 15 dargestellte digitale Angabe 16 der Geschwindigkeit des Kraftfahrzeuges 1 eingeblendet.

Fig. 6 zeigt das Kombiinstrument 3 aus der Sicht eines Insassen des Kraftfahrzeuges 1, also aus der Ebene 18 heraus betrachtet, für den zu Fig. 4 korrespondierenden Zustand, in dem die die steuerbare Schicht 12 opak ist. Dabei wird nicht nur die von der ersten Anzeigeeinrichtung 15 dargestellte digitale Angabe 16 der Geschwindigkeit des Kraftfahrzeuges 1 sondern auch der von der ersten Anzeigeeinrichtung 15 - im durch die opake steuerbare Schicht 12 abgedeckten Bereich der Zeigerbasis 22 - dargestellte Status 17 der Abstandsregelung eingeblendet.

### Bezugszeichenliste

- 1: Kraftfahrzeug
- 2: Lenkrad
- 3: Kombiinstrument
- 10, 15: Anzeigeeinrichtung
- 11: Scheibe mit einstellbarer Transparenz
- 12: steuerbare Schicht
- 13, 18: Ebene
- 14: semitransparenter Spiegel
- 16: digitale Angabe der Geschwindigkeit eines Kraftfahrzeuges
- 17: Status einer Abstandsregelung
- 19: Schutzscheibe
- 20: Pfeil
- 21: Zeiger
- 22: Zeigerbasis
- 23: Skala
- 25: Anzeigesteuerung

## Patentansprüche

1. Kombiinstrument (3) für ein Kraftfahrzeug (1) mit einer ersten Anzeigeeinrichtung (15) und mit einer zweiten Anzeigeeinrichtung (10), wobei das Kombiinstrument (3) einen semitransparenten Spiegel (14) zum Reflektieren von mittels der zweiten Anzeigeeinrichtung (10) emittiertem Licht aufweist, und wobei der semitransparente Spiegel (14) für von der ersten Anzeigeeinrichtung (15) emittiertes Licht im wesentlichen transparent ist, **dadurch gekennzeichnet, dass** das Kombiinstrument (3) eine zwischen dem semitransparenten Spiegel (14) und der zweiten Anzeigeeinrichtung (10) angeordnete Scheibe (11) mit einstellbarer Transparenz aufweist, welche separat von dem semitransparenten Spiegel (14) ausgestaltet und parallel zu der zweiten Anzeigeeinrichtung (10) angeordnet ist.

2. Kombiinstrument (3) nach Anspruch 1, **dadurch gekennzeichnet, dass** der semitransparente Spiegel (14) eine der ersten Anzeigeeinrichtung (15) zugewandte im wesentlichen transparente Oberfläche und eine der zweiten Anzeigeeinrichtung (10) zugewandte im Wesentlichen reflektierende Oberfläche aufweist.

3. Kombiinstrument (3) nach einem der vorhergehenden Ansprüche, **dadurch gekennzeichnet, dass** die Scheibe (11) mit einstellbarer Transparenz eine Twisted Nematics Schicht, eine CLC Schicht, eine PDLC Schicht oder eine PALC Schicht aufweist.

4. Kombiinstrument (3) nach einem der vorhergehenden Ansprüche, **dadurch gekennzeichnet, dass** die erste Anzeigeeinrichtung (15) als Digitalanzeige ausgestaltet ist oder eine Digitalanzeige umfasst.

5. Kombiinstrument (3) nach einem der vorhergehenden Ansprüche, **dadurch gekennzeichnet, dass** die zweite Anzeigeeinrichtung (10) als Analoganzeige ausgestaltet ist oder eine Analoganzeige umfasst.

6. Kraftfahrzeug (1) **dadurch gekennzeichnet, dass** es ein Kombiinstrument (3) nach einem der vorhergehenden Ansprüche aufweist.

7. Kraftfahrzeug (1) nach Anspruch 6, **dadurch gekennzeichnet, dass** es eine dem Kombiinstrument (3) zugeordnete Anzeigesteuerung (25) zur Einstellung der Transparenz der Scheibe (11) mit einstellbarer Transparenz in Abhängigkeit von mittels der ersten Anzeigeeinrichtung (15) dargestellten Informationen umfasst.

## Claims

1. Combination instrument (3) for a motor vehicle (1) with a first display device (15) and with a second display device (10), the combination instrument (3) having a semi-transparent mirror (14) for reflecting light emitted by means of the second display device (10), and the semi-transparent mirror (14) being substantially transparent to light emitted by the first display device (15), **characterized in that** the combination instrument (3) has a sheet (11) of adjustable transparency which is arranged between the semi-transparent mirror (14) and the second display device (10), is designed separately from the semi-transparent mirror (14) and is arranged parallel to the second display device (10).

2. Combination instrument (3) according to Claim 1, **characterized in that** the semi-transparent mirror (14) has a substantially transparent surface facing the first display device (15), and a substantially reflecting surface facing the second display device (10).

3. Combination instrument (3) according to one of the preceding claims, **characterized in that** the sheet (11) of adjustable transparency has a twisted nematics layer, a CLC layer, a PDLC layer or a PALC layer.

4. Combination instrument (3) according to one of the preceding claims, **characterized in that** the first display device (15) is designed as a digital display or comprises a digital display.

5. Combination instrument (3) according to one of the preceding claims, **characterized in that** the second display device (10) is designed as an analogue display or comprises an analogue display.

6. Motor vehicle (1) **characterized in that** it has a combination instrument (3) according to one of the preceding claims.

7. Motor vehicle (1) according to Claim 6, **characterized in that** it comprises a display control (25), assigned to the combination instrument (3), for adjusting the transparency of the sheet (11) of adjustable transparency as a function of information displayed by means of the first display device (15)

## Revendications

1. Combinaison (3) d'instruments pour véhicule automobile (1),
présentant un premier dispositif d'affichage (15) et un deuxième dispositif d'affichage (10),
la combinaison (3) d'instruments présentant un miroir semi-transparent (14) qui réfléchit la lumière émise au moyen du deuxième dispositif d'affichage (10),
le miroir semi-transparent (14) étant essentiellement transparent pour la lumière émise par le premier dispositif d'affichage (15),
**caractérisée en ce que**
la combinaison (3) d'instruments présente une plaque (11) à transparence ajustable disposée entre le miroir semi-transparent (14) et le deuxième dispositif d'affichage (10), la plaque étant formée séparément du miroir semi-transparent (14) et étant disposée parallèlement au deuxième dispositif d'affichage (10).

2. Combinaison (3) d'instruments selon la revendication 1, **caractérisée en ce que** le miroir semi-transparent (14) présente une surface essentiellement transparente tournée vers le premier dispositif d'affichage (15) et une surface essentiellement réfléchissante tournée vers le deuxième dispositif d'affichage (10).

3. Combinaison (3) d'instruments selon l'une des revendications précédentes, **caractérisée en ce que** la plaque (11) à transparence ajustable présente une couche nématique torsadée, une couche CLC, une couche PDLC ou une couche PALC.

4. Combinaison (3) d'instruments selon l'une des revendications précédentes, **caractérisée en ce que** le premier dispositif d'affichage (15) est configuré comme affichage numérique ou comporte un affichage numérique.

5. Combinaison (3) d'instruments selon l'une des revendications précédentes, **caractérisée en ce que** le deuxième dispositif d'affichage (10) est configuré comme affichage analogique ou comporte un affichage analogique.

6. Véhicule automobile (1), **caractérisé en ce qu'**il présente une combinaison (3) d'instruments selon l'une des revendications précédentes.

7. Véhicule automobile (1) selon la revendication 6, **caractérisé en ce qu'**il comporte une commande d'affichage (25) associée à la combinaison (3) d'instruments pour régler la transparence de la plaque (11) à transparence ajustable en fonction d'informations présentées au moyen du premier dispositif d'affichage (15).
